# EUROPEAN PATENT APPLICATION

(11) **EP 1 821 251 A1**
(43) Date of publication of application: **22.08.2007**
(21) Application number: 06256568.4
(22) Date of filing: 22.12.2006
(51) Int. Cl.: G06Q 30/00

(54) **Electronic inventory tag system, electronic inventory tag and relay apparatus**

(30) Priority: 15.02.2006 JP 2006038662
(71) Applicant: Mitsumi Electric Co., Ltd., Tama-shi, Tokyo 206-8567 (JP)
(72) Inventor: Kimura, Youichi c/o Mitsumi Electric Co., Ltd, Tama-shi, Tokyo 206-8567 (JP); Sukegawa, Katsuhiko c/o Mitsumi Electric Co., Ltd, Tama-shi, Tokyo 206-8567 (JP)
(74) Representative: Rees, Alexander Ellison

(57) **Abstract**

An electronic inventory tag system including an electronic inventory tag, a management apparatus using a management database for managing the electronic inventory tag, and a relay apparatus for relaying communications between the electronic inventory tag and the management apparatus is disclosed. The relay apparatus transmits a non-registration call. The electronic inventory tag determines whether the electronic inventory tag is registered when receiving the non-registration call. The electronic inventory tag transmits a non-registration response to the relay apparatus when determining that the electronic inventory tag is unregistered. The relay apparatus transmits non-registration detection data to the management apparatus when receiving the non-registration response. The management apparatus registers electronic inventory tag data corresponding to the electronic inventory tag in the management database based on the non-registration detection data.

## Description

### BACKGROUND OF THE INVENTION

### 1. Field of the Invention

The present invention generally relates to an electronic inventory tag system, an electronic tag, and a relay apparatus, and more particularly to an electronic inventory tag system, an electronic tag, and a relay apparatus for relaying communications between the electronic inventory tag and a management apparatus that manages electronic inventory tags by using a management database.

### 2. Description of the Related Art

In an electronic inventory tag system according to a related art case, electronic inventory tags carrying rewritable display data are placed on inventory shelves after having their ID data registered in a host computer. Accordingly, the host computer can rewrite the display data of the electronic inventory tags by accessing the electronic inventory tags via an access point (For example, Japanese Laid-Open Patent Application Nos. 2002-304673, 2005-99888, 2002-109177, 2004-265196, 9-138892).

In the electronic inventory tag system, before the electronic inventory tags are placed on inventory shelves, a device referred to as an initializer is used for registering predetermined ID data of electronic inventory tags into the host computer. Based on the ID data of the electronic inventory tags, the host computer accesses the electronic inventory tags via the access point and sets the data to be displayed by the electronic inventory tags (display data).

Likewise, in a case of removing the electronic inventory tags from the inventory shelves, the data of the electronic inventory tags are deleted by using the initializer to read out data from the electronic inventory tags and delete the corresponding ID data of the electronic inventory tags from the host computer.

However, the efficiency of placing and removing the electronic inventory tags is unsatisfactory with the above-described electronic inventory tag system since the electronic inventory tag system requires a process of registering ID data in the host computer when placing the electronic inventory tags on the inventory shelves and a process of deleting ID data from the host computer when removing the electronic inventory tag from inventory shelves.

### SUMMARY OF THE INVENTION

The present invention may provide an electronic inventory tag system, an electronic inventory tag, and a relay apparatus that substantially obviate one or more of the problems caused by the limitations and disadvantages of the related art.

Features and advantages of the present invention will be set forth in the description which follows, and in part will become apparent from the description and the accompanying drawings, or may be learned by practice of the invention according to the teachings provided in the description. Objects as well as other features and advantages of the present invention will be realized and attained by an electronic inventory tag system, an electronic inventory tag, and a relay apparatus particularly pointed out in the specification in such full, clear, concise, and exact terms as to enable a person having ordinary skill in the art to practice the invention.

To achieve these and other advantages and in accordance with the purpose of the invention, as embodied and broadly described herein, an embodiment of the present invention provides an electronic inventory tag system including: an electronic inventory tag; a management apparatus using a management database for managing the electronic inventory tag; and a relay apparatus for relaying communications between the electronic inventory tag and the management apparatus; wherein the relay apparatus transmits a non-registration call to the electronic inventory tag, wherein the electronic inventory tag determines whether the electronic inventory tag is registered when receiving the non-registration call, wherein the electronic inventory tag transmits a non-registration response to the relay apparatus when determining that the electronic inventory tag is unregistered, wherein the relay apparatus transmits non-registration detection data to the management apparatus when receiving the non-registration response, and wherein the management apparatus registers electronic inventory tag data corresponding to the electronic inventory tag in the management database based on the non-registration detection data.

In the electronic inventory tag system according to an embodiment of the present invention, the management apparatus may transmit an existence confirmation request corresponding to the electronic inventory tag to the relay apparatus, wherein the relay apparatus may transmit another existence confirmation request to the electronic inventory tag in accordance with the existence confirmation request from the management apparatus, wherein the electronic inventory tag may transmit an existence confirmation response to the relay apparatus when receiving the existence confirmation request from the relay apparatus, wherein the relay apparatus may transmit a notice in accordance with the existence confirmation response from the electronic inventory tag, wherein the management apparatus may delete the electronic inventory tag data corresponding to the electronic inventory tag from the management database in accordance with the notice from the relay apparatus.

In the electronic inventory tag system according to an embodiment of the present invention, the notice from the relay apparatus may include an error notice, wherein the management apparatus may delete the electronic inventory tag data from the management database when the management apparatus receives the error notice for a predetermined number of times.

Furthermore, another embodiment of the present invention provides an electronic inventory tag for communicating with a management apparatus via a relay apparatus, the electronic inventory tag including: a communication part for communicating with the relay apparatus; a storage part for storing registration status of the electronic inventory tag; a processing part for determining whether the electronic inventory tag is registered when the communication part receives a non-registration call from the relay apparatus by referring to the storage part and transmits a non-registration response to the relay apparatus when determining that the registration status of the electronic inventory tag is unregistered.

In the electronic inventory tag according to an embodiment of the present invention, the processing part may transmit an existence confirmation response to the relay apparatus when receiving an existence confirmation request from the relay apparatus.

Furthermore, another embodiment of the present invention provides a relay apparatus for relaying communications between a management apparatus and an electronic inventory tag, the relay apparatus including: a first communication part for communicating with the management apparatus; a second communication part for communicating with the electronic inventory tag; and a processing part for transmitting a non-registration call with the second communication part and transmitting non-registration detection data to the management apparatus via the first communication part when receiving a non-registration response from the electronic inventory tag.

In the relay apparatus according to an embodiment of the present invention, the processing part may transmit an existence confirmation request to the electronic inventory tag in accordance with another existence confirmation request from the management apparatus.

Other objects and further features of the present invention will be apparent from the following detailed description when read in conjunction with the accompanying drawings.

### BRIEF DESCRIPTION OF THE DRAWINGS

Fig.1 is a schematic diagram showing an exemplary configuration of an electronic inventory tag system according to an embodiment of the present invention;
Fig.2 is a block diagram showing an exemplary configuration of a management apparatus according to an embodiment of the present invention;
Fig.3 is a schematic diagram showing an exemplary configuration of data in a management database according to an embodiment of the present invention;
Fig.4 is a schematic diagram showing an exemplary configuration of data included in electronic inventory tag data according to an embodiment of the present invention;
Fig.5 is a block diagram showing an exemplary configuration of a relay apparatus according to an embodiment of the present invention;
Fig.6 is a block diagram showing an exemplary configuration of an electronic inventory tag according to an embodiment of the present invention;
Fig.7 is a schematic diagram for describing an operation of an automatic registration process performed by an electronic inventory tag system according to an embodiment of the present invention;
Fig.8 is a flowchart showing the processes of a relay apparatus in an automatic registration operation according to an embodiment of the present invention;
Fig.9 is a flowchart showing the processes of an electronic inventory tag in an automatic registration operation according to an embodiment of the present invention;
Fig.10 is a flowchart showing the processes of a management apparatus in an automatic registration operation according to an embodiment of the present invention;
Fig.11 is a schematic diagram for describing an operation of an automatic deletion process performed by an electronic inventory tag system according to an embodiment of the present invention;
Fig.12 is a flowchart showing the processes of a management apparatus in an automatic registration operation according to an embodiment of the present invention;
Fig.13 is a flowchart showing the processes of a relay apparatus in an automatic deletion operation according to an embodiment of the present invention; and
Fig.14 is a flowchart showing the processes of an electronic inventory tag in an automatic deletion operation according to an embodiment of the present invention.

### DESCRIPTION OF THE PREFERRED EMBODIMENTS

In the following, embodiments of the present invention will be described with reference to the accompanying drawings.

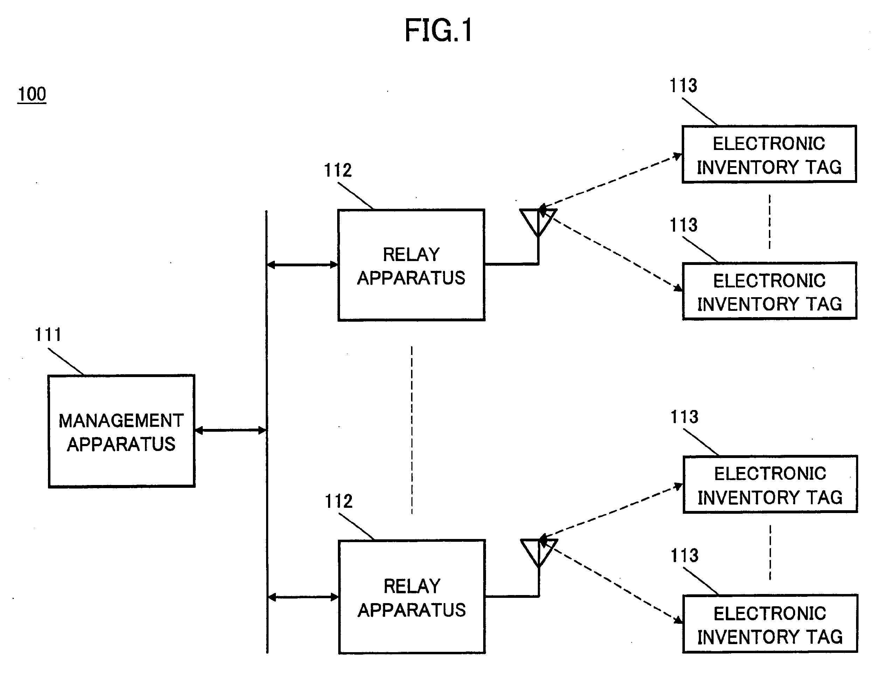

Fig.1 is a schematic diagram showing an electronic inventory tag system according to an embodiment of the present invention.

The electronic inventory tag system 100 according to an embodiment of the present invention includes, for example, one or more electronic inventory tags 113 provided to one or more inventory shelves, a management apparatus 111 for managing the electronic inventory tags 113, and a relay apparatus(es) 112 for relaying data between the management apparatus 111 and the electronic inventory tags 113.

### [Management Apparatus 111]

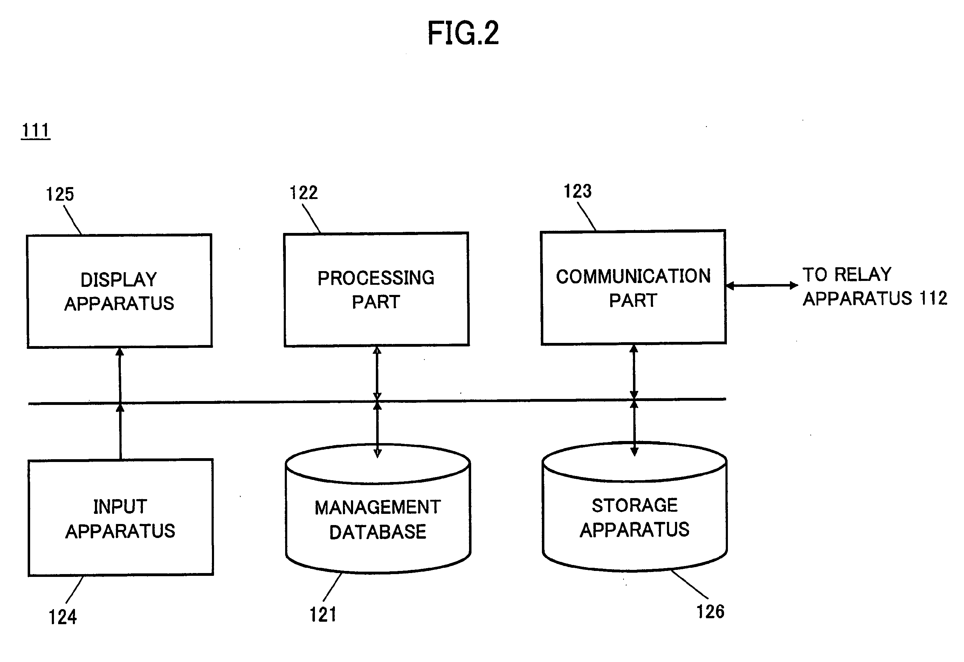

Fig.2 is a block diagram showing a configuration of the management apparatus 111 according to an embodiment of the present invention.

The management apparatus 111 includes, for example, a computer system having a management database 121, a processing part 122, a communication control part 123, an input apparatus 124, a display apparatus 125, and a storage apparatus 126.

Data of the electronic inventory tags are registered in the management database 121.

The processing part 122 includes, for example, a CPU. The processing part 122 executes various processes for managing the electronic inventory tags 113 based on a program(s) preinstalled in the storage apparatus 126.

The communication control part 123 is connected to the relay apparatus 112 via a network such as LAN, WAN or a private line for performing communications with the relay apparatus 112.

The input apparatus 124 includes, for example, a mouse, a keyboard, or the like for inputting various commands and data.

The display apparatus 125 includes, for example, a LCD, a CRT, or the like for displaying the management database 121.

The storage apparatus 126 includes, for example, a hard disk drive in which programs executed by the processing part 122 are installed.

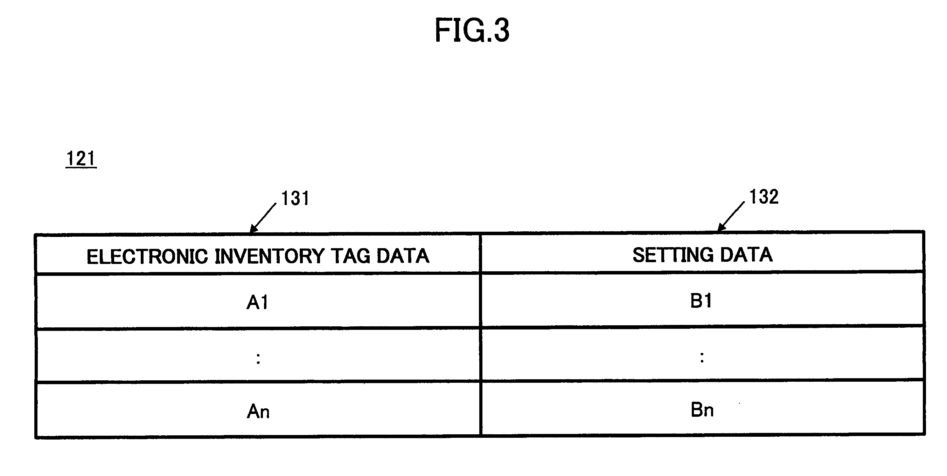

Fig.3 is a schematic diagram showing an exemplary configuration of data of the management database 121.

The management database 121 includes, for example, electronic inventory tag data 131 and setting data 132.

The electronic inventory tag data 131 are for identifying and managing the electronic inventory tags. The electronic inventory tag data 131 include, for example, inventory tag ID data and inventory code data.

The setting data 132 include, for example, data to be displayed by the electronic inventory tags 113 (e.g. name or price of product). The setting data 132 can be discretionally set by the management apparatus 111.

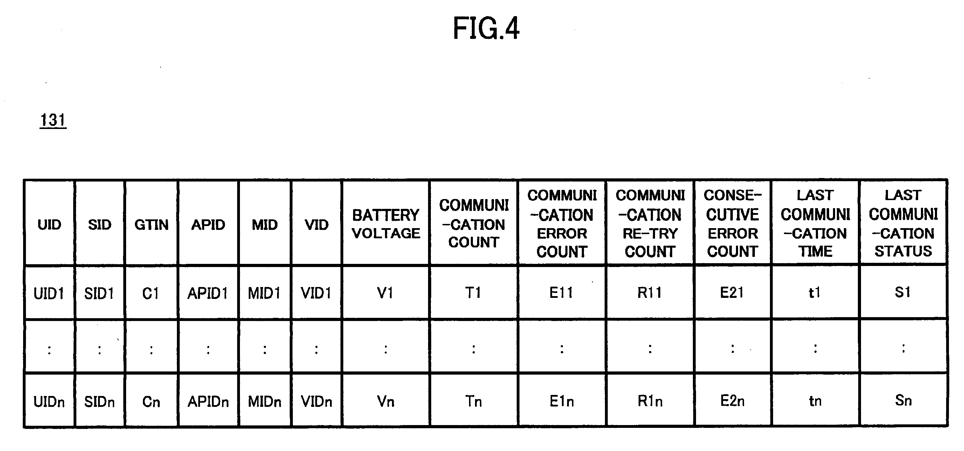

Fig.4 is a schematic diagram showing an exemplary configuration of the electronic tag data 131.

The electronic tag data 131 include, for example, UID data, SID data, GTIN data, APID data, MID (Model ID) data, VID (Version ID) data, battery voltage data, communications count data, communication error count data, communication retry count data, consecutive error count data, last communication time data, and last communication status data.

The UID data represent a unique ID assigned to each inventory tag upon manufacture. The SID data represent an ID allocated to each inventory tag by the management apparatus 111 for use during communication. The GTIN data represent a product code (Global Trade Item Number). The APID data represent an ID for identifying each relay apparatus (AP: Access Point) 112.

The MID data represent an ID for indicating the model type of the electronic inventory tag 113. The VID data represent an ID for indicating the version of the firmware of the electronic inventory tag 113. The battery voltage data represent the voltage of the battery installed inside the electronic inventory tag 113.

The communications count data represent the number of times of communications conducted between the electronic inventory tag 113 and the relay apparatus 112. The communication error data represent the number of times of communication errors occurred between the electronic inventory tag 113 and the relay apparatus 112.

The communication retry count data represent the number of times of retrying of communications between the electronic inventory tag 113 and the relay apparatus 112. The consecutive error count data represents the number of times of consecutive communication errors occurred between the electronic inventory tag 113 and the relay apparatus 112.

The last communication time data represent the time when communication between the electronic inventory tag 113 and the relay apparatus 112 was has been most recently conducted. The last communication status data represent the status of the last communication between the electronic inventory tag 113 and the relay apparatus 112.

The management apparatus 111 manages the electronic inventory tags based on the above-described electronic inventory tag data 131.

### [Relay Apparatus 112]

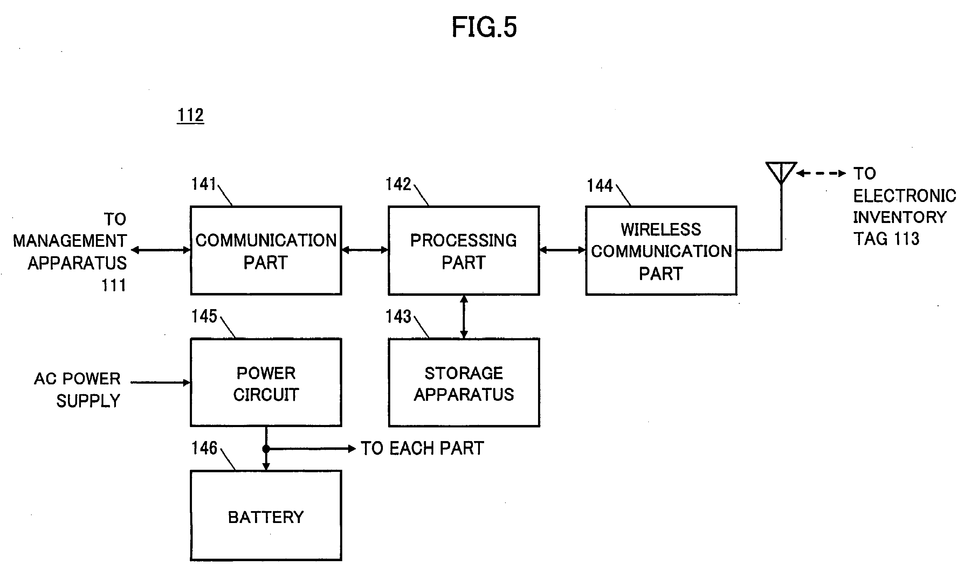

Fig.5 is a block diagram showing a configuration of the relay apparatus 112 according to an embodiment of the present invention.

The relay apparatus 112 includes, for example, a communication part 141, a processing part 142, a storage part 143, a wireless communication part 144, a power circuit 145, and a battery 146.

The communication part 141 is connected to the management apparatus 111 via a network such as a LAN, WAN or a private line for performing communications with the management apparatus 111.

The processing part 142 includes, for example, a microcomputer. The processing part 142 executes various processes such as relaying communications between the management apparatus 111 and the electronic inventory tag 113 based on a program(s) installed in the storage apparatus 143.

The storage part 143 includes, for example, a rewritable non-volatile memory (e.g. EEPROM), ROM, RAM. The storage part 143 is loaded with, for example, programs for controlling communications and electronic inventory tag data of electronic inventory tags within communicable range.

The wireless communication part 144 is for conducting wireless communications with the electronic inventory tags 113.

The power circuit 145 is connected to an outside AC power supply (e.g. commercial power source). The power circuit 145 converts the connected AC power supply to a direct current voltage and supplies the DC voltage to the communication part 141, the processing part 142, the storage part 143, and the wireless communication part 144 as a driving voltage.

The battery 146 includes, for example, a chargeable accumulating part such as a Ni-Cd battery, a lithium ion battery, or an electric double layer capacitor. The battery 146 is charged with the DC voltage generated from the power circuit 145. In a case where the AC power is cut off, the battery 146 supplies voltage to the communication part 141, the processing part 142, the storage part 143, and the wireless communication part 144 for driving the communication part 141, the processing part 142, the storage part 143, and the wireless communication part 144 for a predetermined period time so that a termination program can be executed.

### [Electronic Inventory Tag 113]

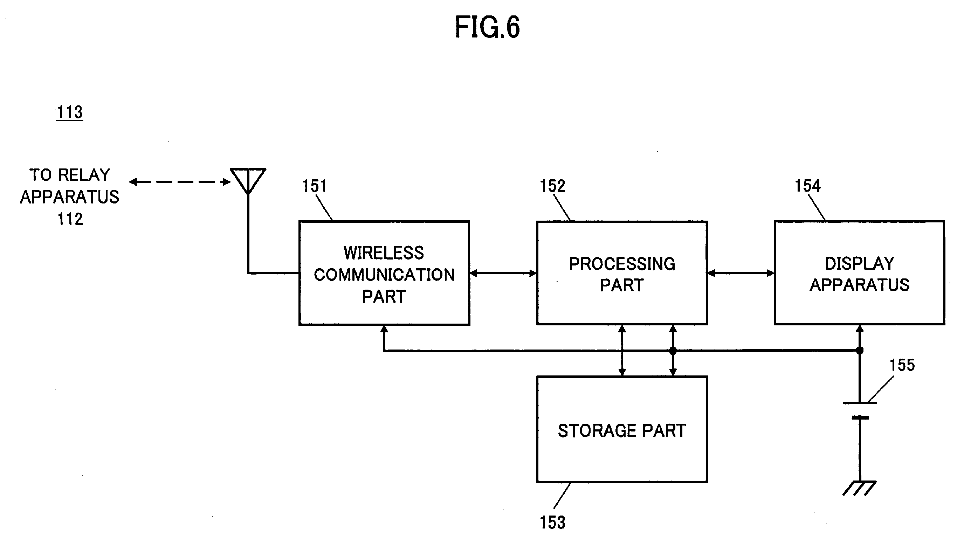

Fig.6 is a block diagram showing a configuration of the electronic inventory tag 113 according to an embodiment of the present invention.

The electronic inventory tag 113 includes, for example, a wireless communication part 151, the processing part 152, the storage part 153, the display apparatus 154, and the battery 155.

The wireless communication part 151 is for conducting wireless communications with the relay apparatus 112.

The processing part 152 includes, for example, a CPU. The processing part 152 executes various processes such as controlling communications with the relay apparatus 112 based on a program(s) stored in the storage part 153 and controlling the display of the displaying apparatus 154.

The storage part 153 includes, for example, a rewritable non-volatile memory (e.g. EEPROM). The storage part 153 is loaded with, for example, programs executed by the processing part 152 as well as electronic inventory tag ID data and product code data. A part of the electronic inventory tag data and the product code data is pre-registered in the storage part 153 and can be changed by the relay apparatus 112.

The display apparatus 154 includes, for example, a LCD, an EL (Electro-Luminescent) panel, an electronic paper or the like. The display apparatus 154 displays, for example, product names, product codes, and product prices in accordance with the instructions from the processing part 152.

The battery 155 includes, for example, a small size battery. The battery 155 supplies power for driving the wireless communication part 151, the processing part 152, the storage part 153, and the display apparatus 154.

### [Operation]

### [Automatic Registration Process]

Next, an operation of an automatic registration process of the electronic inventory tag system according to an embodiment of the present invention is described.

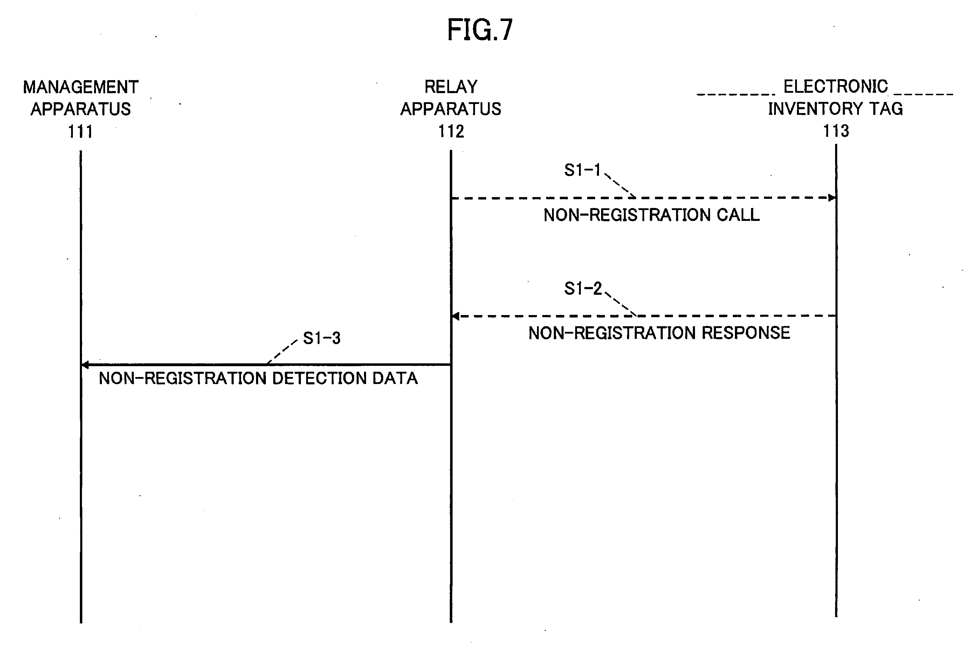

Fig.7 is a schematic diagram for describing an operation of an automatic registration process performed by the electronic inventory tag system 100 according to an embodiment of the present invention.

First, the relay apparatus 112 transmits a non-registration call (Step S1-1).

When the electronic inventory tag 113 receives (picks up) the non-registration call from the relay apparatus 112, the electronic inventory tag 113 determines whether itself is registered. In a case where the electronic inventory tag 113 is unregistered (non-registration state), the electronic inventory tag 113 transmits a non-registration response to the relay apparatus 112 (Step S1-2).

When the relay apparatus 112 receives the non-registration response from the electronic inventory tag 113, the relay apparatus 112 generates non-registration detection data based on the electronic inventory tag data included in the non-registration response transmitted from the electronic inventory tag 113 and transmits the non-registration detection data to the management apparatus 111 (Step S1-3).

When the management apparatus 111 receives the non-registration detection data from the relay apparatus 112, the management apparatus 111 newly registers data of the unregistered electronic inventory tag in the management database 121 based on the non-registration detection data.

Next, the processes for each of the relay apparatus 112, the electronic inventory tag 113, and the management apparatus 111 are described.

First, the processes of the relay apparatus 112 according to an embodiment of the present invention are described.

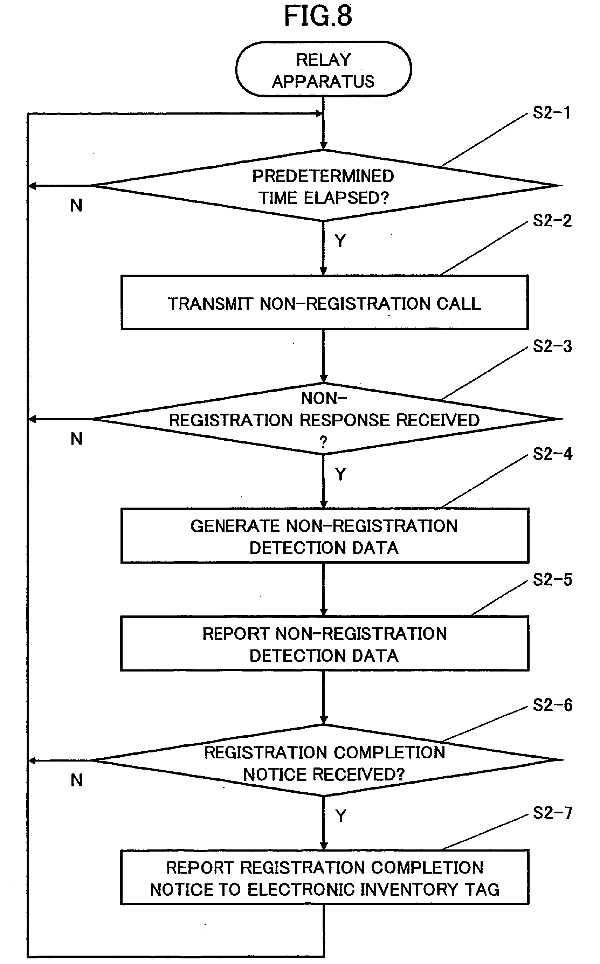

Fig. 8 is a flowchart showing the processes of the relay apparatus 112 in an automatic registration operation according to an embodiment of the present invention.

After a predetermined time elapses (Yes in Step S2-1), the processing part 142 of the relay apparatus 112 instructs the wireless communication part 144 to transmit a non-registration call (S2-2).

When the wireless communication part 144 receives a non-registration response (Yes in Step S2-3), the processing part 142 generates non-registration detection data (Step S2-4).

Then, the processing part 142 transmits (reports) the registration detection data to the management apparatus 11, for example, via the wireless communication part 144 (S2-5). When the processing part 142 receives a registration completion notice from the management apparatus 111 (Yes in S2-6), the processing part 142 transmits (reports) the registration completion notice to the electronic inventory tag 113 that has been registered by the management apparatus 11 (Step S2-7).

Next, the processes of the electronic inventory tag 113 according to an embodiment of the present invention are described.

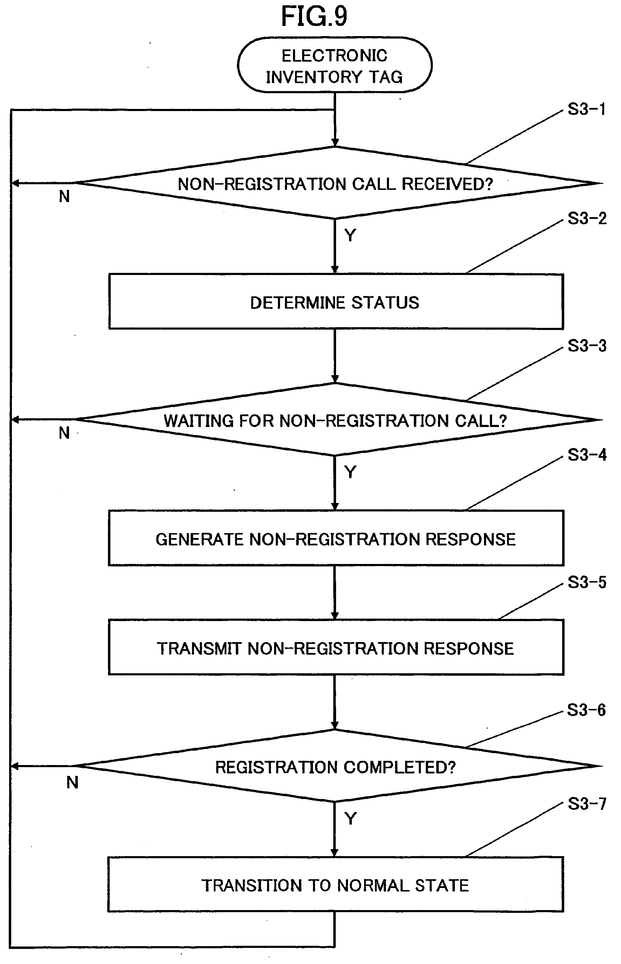

Fig.9 is a flowchart showing the processes of the electronic inventory tag 113 in an automatic registration operation according to an embodiment of the present invention.

When the processing part 152 of the electronic inventory tag 113 receives a non-registration call from the relay apparatus 112 (Yes in Step S3-1), the processing part 152 determines the status of its corresponding electronic inventory tag 113 by referring to the storage apparatus 153 (Step S3-2). The statuses stored in the storage apparatus 153 include, for example, a normal state in which the electronic inventory tag 113 is registered in the management apparatus 111 and in a state able to communicate with the relay apparatus 112, a registration waiting state in which the electronic inventory tag 113 is waiting to be registered in the management apparatus 111, and an ID allocation waiting state in which the electronic inventory tag 113 is waiting to have an ID allocated (assigned) thereto. The processing part 152 of the electronic inventory tag 113 determines that its corresponding electronic inventory tag 113 is in an unregistered state (non-registration state) when the its corresponding electronic inventory tag 113 is, for example, in the registration waiting state or the ID allocation waiting state.

In a case where the processing part 152 determines that its corresponding electronic inventory tag 113 is in an unregistered state (Yes in Step S3-3), the processing part 152 generates a response with respect to the non-registration call (non-registration response) (Step S3-4). The response with respect to the non-registration call (non-registration response) includes electronic inventory tag data of its corresponding electronic inventory tag that are registered beforehand in the storage apparatus 153. The electronic inventory tag data include, for example, UID data, SID data, GTIN data, APID data, MID (Model ID) data, VID (Version - ID) data, battery voltage data, communication count data, communication error count data, communication re-try count data, consecutive error count data, last communication time data, and last communication status data.

The processing part 152 transmits the non-registration response to the relay apparatus 112 (Step S3-5) and waits to receive the registration completion notice in answer to the non-registration response from the management apparatus 111 via the relay apparatus 112. When the processing part 152 receives the registration completion notice (Yes in Step S3-6), the processing part 152 sets the electronic inventory tag status stored in the storage apparatus 153 to a normal state (Step S3-7).

Next, the processes of the management apparatus 111 according to an embodiment of the present invention are described.

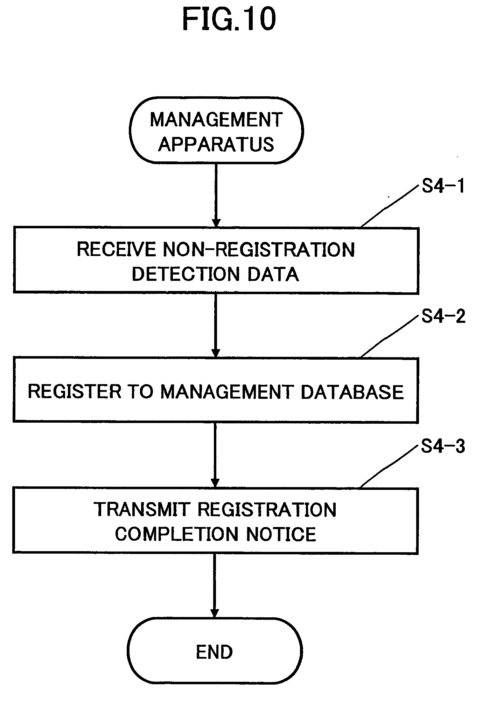

Fig.10 is a flowchart showing the processes of the management apparatus 111 in an automatic registration operation according to an embodiment of the present invention.

When the processing part 122 of the management apparatus 111 receives non-registration detection data from the relay apparatus 112 (Step S4-1), the processing part 122 registers the received non-registration detection data in the management database 121 (Step S4-2). When the non-registration detection data processing part 122 is registered in the management database 121, the processing part 122 transmits a registration completion notice to the relay apparatus 112 (Step S4-3).

Accordingly, in a case where there is an unregistered electronic inventory tag 113 situated within a communications area of the relay apparatus 112, the electronic inventory tag 113 is automatically registered in the management database 121 of the management apparatus 111.

### [Automatic Deletion Process]

Next, an operation of an automatic deletion process of the electronic inventory tag system according to an embodiment of the present invention is described.

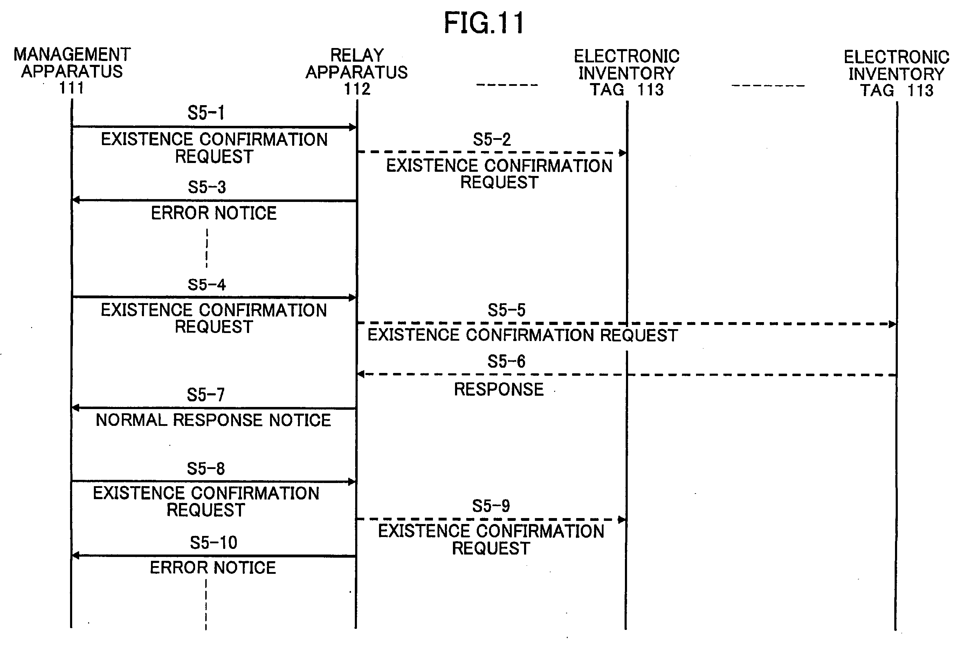

Fig.11 is a schematic diagram for describing an operation of an automatic deletion process performed by the electronic inventory tag system 100 according to an embodiment of the present invention.

First, the management apparatus 111 periodically transmits an existence confirmation request (first existence confirmation request) to the relay apparatus 112 for confirming existence (validity) of a predetermined electronic inventory tag(s) 113 (Step S5-1). In accordance with the existence confirmation request from the management apparatus 111, the relay apparatus 112 transmits an existence confirmation request (second existence confirmation request) to the predetermined electronic inventory tag(s) 113 (Step S5-2). In a case where the relay apparatus 112 receives no response in answer to the transmitted second existence confirmation request, the relay apparatus 112 transmits an error notice to the management apparatus 111 (Step S5-3).

Then, the management apparatus 111 may transmit another first existence confirmation request to the relay apparatus 112 (Step S5-4), and then the relay apparatus 112 may transmit another second existence confirmation request to the predetermined electronic inventory tags 113 (Step S5-5). In a case where a response is transmitted from the predetermined electronic inventory tag(s) 113 to the relay apparatus 112 (Step S5-6), the relay apparatus 112 transmits a normal response notice to the management apparatus (Step S5-7), the management apparatus 111 determines that the predetermined electronic inventory tag(s) 113 exists (valid) and does not delete the data of the electronic inventory tag 113 from the management database 121.

The management apparatus 111 may transmit the first existence confirmation request to the relay apparatus 112 for a predetermined number of times (Step S5-8), and then the relay apparatus 112 may transmit the second existence confirmation request to the electronic inventory tag(s) 113 for a predetermined number of times (Step S5-9). In a case where the management apparatus 111 receives error notices corresponding to the first existence confirmation requests transmitted for the predetermined number of times from the relay apparatus 112, the management apparatus 111 deletes corresponding electronic inventory data from the management database 121.

Next, the processes for each of the relay apparatus 112, the electronic inventory tag 113, and the management apparatus 111 are described.

First, the processes of the management apparatus 111 according to an embodiment of the present invention are described.

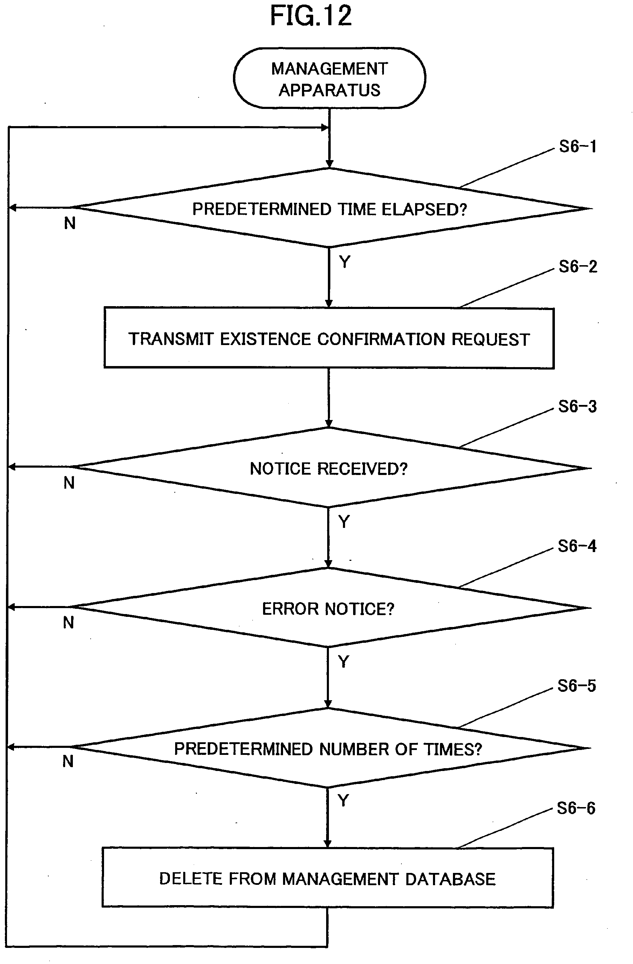

Fig.12 is a flowchart showing the processes of the management apparatus 111 in an automatic deletion operation according to an embodiment of the present invention.

After a predetermined time elapses (Yes in Step S6-1), the processing part 122 of the management apparatus 111 instructs the communication part 123 to transmit an existence confirmation request (first existence confirmation request) to the relay apparatus 112 (S6-2). When the processing part 122 receives a notice in response to the existence confirmation request from the relay apparatus 112, the processing part 122 determines whether the notice from the relay apparatus 112 is an error notice (Step S6-4).

In a case where the notice from the relay apparatus 112 is an error notice (Yes in Step S6-4), the processing part 122 determines the number of times of receiving the error notice (e.g. first error notice, second error notice, ···) from the corresponding electronic inventory tag (Step S6-5). In a case where the error notice is of a predetermined number of times, the processing part 122 deletes the electronic inventory tag data corresponding to the error notice from the management database 121 (Step S6-6).

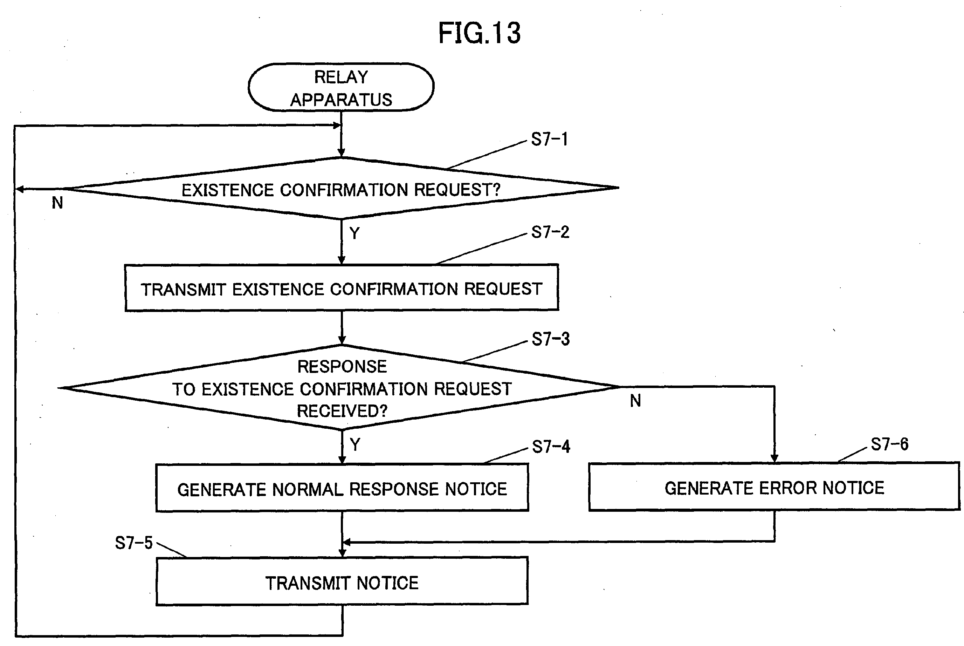

Fig.13 is a flowchart showing the processes of the relay apparatus 112 in an automatic deletion operation according to an embodiment of the present invention.

When the processing part 142 of the relay apparatus 112 receives an existence confirmation request (first existence confirmation request) from the management apparatus 111 (Step S7-1), the processing part 142 transmits an existence confirmation request (second existence confirmation request) to the electronic inventory tag 113 (Step S7-2). In a case where the processing part 142 receives an existence confirmation response from the electronic inventory tag 113 within a predetermined time (Step S7-3), the processing part 142 generates a normal response notice (Step S7-4) and transmits, the normal response notice to the management apparatus (Step S7-5).

In a case where the processing part 142 does not receive an existence confirmation response from the electronic inventory tag 113 within a predetermined time, the processing part 142 generates an error notice (Step S7-6) and transmits the error notice to the management apparatus 111 (Step S7-5).

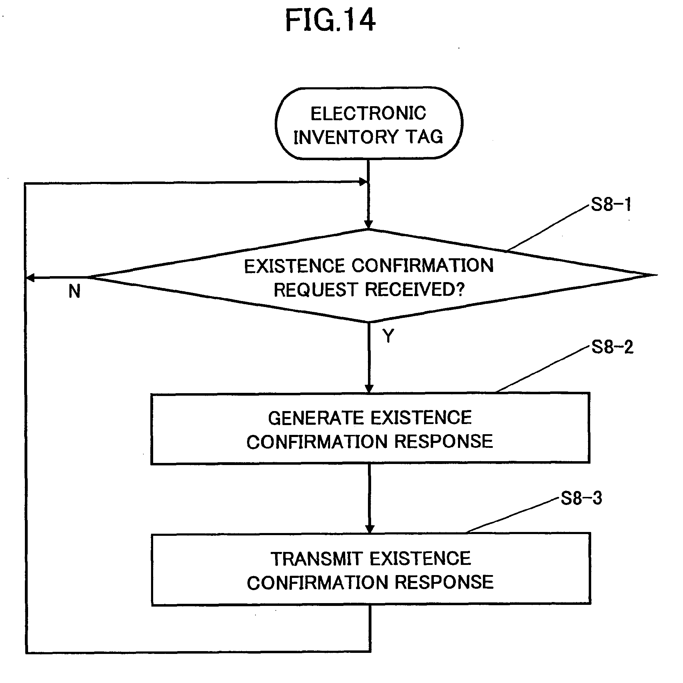

Fig.14 is a flowchart showing the processes of the electronic inventory tag 113 in an automatic deletion operation according to an embodiment of the present invention.

When the processing part 152 of the electronic inventory tag 113 receives an existence confirmation request (second existence confirmation request) from the relay apparatus 112 (Step S8-1), the processing part 152 generates an existence confirmation response (Step S8-2) and transmits the existence confirmation response to the relay apparatus (Step S8-3). The existence confirmation response includes electronic inventory tag data which serve to identify the electronic inventory tag 113 transmitting the existence confirmation response.

With the above-described electronic inventory tag system including the electronic inventory tag, the management apparatus, and the relay apparatus according to an embodiment of the present invention, data of electronic inventory tags can be automatically registered in a host computer or deleted from a host computer simply by placing the electronic tags on inventory shelves or removing the electronic tags from the inventory shelves. Therefore no registration process or deletion process with use of, for example, an initializer is required. Hence, the efficiency of placing and removing the electronic inventory tags can be improved.

Further, the present invention is not limited to these embodiments, but variations and modifications may be made without departing from the scope of the present invention. For example, although the above-described embodiment of the present invention describes an electronic inventory tag system, the present invention may be applied to other systems using wireless communications.

The present application is based on Japanese Priority Application No.2006-038662 filed on February 15, 2006, with the Japanese Patent Office, the entire contents of which are hereby incorporated by reference.

## Claims

1. An electronic inventory tag system comprising:
an electronic inventory tag;
a management apparatus using a management database for managing the electronic inventory tag; and
a relay apparatus for relaying communications between the electronic inventory tag and the management apparatus;
wherein the relay apparatus transmits a non-registration call, wherein the electronic inventory tag determines whether the electronic inventory tag is registered when receiving the non-registration call, wherein the electronic inventory tag transmits a non-registration response to the relay apparatus when determining that the electronic inventory tag is unregistered, wherein the relay apparatus transmits non-registration detection data to the management apparatus when receiving the non-registration response, and wherein the management apparatus registers electronic inventory tag data corresponding to the electronic inventory tag in the management database based on the non-registration detection data.

2. The electronic inventory tag system as claimed in claim 1, wherein the management apparatus transmits a first existence confirmation request corresponding to the electronic inventory tag to the relay apparatus, wherein the relay apparatus transmits a second existence confirmation request to the electronic inventory tag in accordance with the first existence confirmation request from the management apparatus, wherein the electronic inventory tag transmits an existence confirmation response to the relay apparatus when receiving the second existence confirmation request from the relay apparatus, wherein the relay apparatus transmits a notice in accordance with the existence confirmation response from the electronic inventory tag, wherein the management apparatus deletes the electronic inventory tag data corresponding to the electronic inventory tag from the management database in accordance with the notice from the relay apparatus.

3. The electronic inventory tag system as claimed in claim 2, wherein the notice from the relay apparatus includes an error notice, wherein the management apparatus deletes the electronic inventory tag data from the management database when the management apparatus receives the error notice for a predetermined number of times.

4. An electronic inventory tag for communicating with a management apparatus via a relay apparatus, the electronic inventory tag comprising:
a communication part for communicating with the relay apparatus;
a storage part for storing registration status of the electronic inventory tag;
a processing part for determining whether the electronic inventory tag is registered when the communication part receives a non-registration call from the relay apparatus by referring to the storage part and transmits a non-registration response to the relay apparatus via the communication part when determining that the registration status of the electronic inventory tag is unregistered.

5. The electronic inventory tag as claimed in claim 4, wherein the processing part transmits an existence confirmation response to the relay apparatus when receiving an existence confirmation request from the relay apparatus.

6. A relay apparatus for relaying communications between a management apparatus and an electronic inventory tag, the relay apparatus comprising:
a first communication part for communicating with the management apparatus;
a second communication part for communicating with the electronic inventory tag; and
a processing part for transmitting a non-registration call with the second communication part and transmitting non-registration detection data to the management apparatus with the first communication part when receiving a non-registration response from the electronic inventory tag.

7. The relay apparatus as claimed in claim 6, wherein the processing part transmits a second existence confirmation request to the electronic inventory tag in accordance with a first existence confirmation request from the management apparatus, wherein the processing part transmits a notice to the management apparatus in accordance with a response from the electronic inventory tag.
